(19) **Europäisches Patentamt / European Patent Office / Office européen des brevets**

(11) **EP 4 085 248 B1**

(12) **EUROPEAN PATENT SPECIFICATION**

(45) Date of publication and mention
of the grant of the patent:
**25.09.2024 Bulletin 2024/39**

(21) Application number: **20701086.9**

(22) Date of filing: **02.01.2020**

(51) International Patent Classification (IPC):
**G01N 29/04** *(2006.01)*        **G01N 29/11** *(2006.01)*
**G01N 29/44** *(2006.01)*

(52) Cooperative Patent Classification (CPC):
**G01N 29/04; G01N 29/11; G01N 29/4418;
G01N 29/4427; G01N 29/4481**

(86) International application number:
**PCT/FI2020/050007**

(87) International publication number:
**WO 2021/136872 (08.07.2021 Gazette 2021/27)**

(54) **METHOD AND APPARATUS FOR DETERMINING MATERIAL QUALITY OF COMPONENT**

VERFAHREN UND VORRICHTUNG ZUR BESTIMMUNG DER MATERIALQUALITÄT EINES
BAUTEILS

PROCÉDÉ ET APPAREIL DE DÉTERMINATION DE LA QUALITÉ DU MATÉRIAU D'UN
COMPOSANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.11.2022 Bulletin 2022/45**

(73) Proprietor: **Wärtsilä Finland Oy**
**65170 Vaasa (FI)**

(72) Inventors:
• **PICULIN, Daniel**
  **65170 Vaasa (FI)**
• **POSA, Alessio**
  **65170 Vaasa (FI)**

(74) Representative: **Boco IP Oy Ab**
**Kansakoulukatu 3**
**00100 Helsinki (FI)**

(56) References cited:
**WO-A1-2013/152018    WO-A2-2010/129701**

**Description**

TECHNICAL FIELD

The present application generally relates to method, system and apparatus for determining material quality of a component. The present application further relates to method, system and apparatus for determining material quality of forged components.

BACKGROUND

This section illustrates useful background information without admission of any technique described herein representative of the state of the art.

Conventionally, automated plants may utilize ultrasonic testing of components, such as connecting rods for engines, for example.

Such plant may comprise for example Connecting Rod (CR) Phased Array Ultrasonic Test (PAUT). The plant may be used to detect material discontinuities (Ultrasonic Test-UT indications) and avoids that parts with flaws, that might cause catastrophic engine failures, are installed on the field.

The inspection may be performed with the PAUT technique, which is for metal pieces equivalent to the echography test in medical field.

Ultrasonic inspection technique is a known way to inspect a piece, like a metal cast or forged piece, whether it comprises any faults. An ultrasonic probe is moved around the piece either manually or with an automated device in order to utilize high frequency sound waves penetrating through the piece. The sound waves propagate in the piece and part of the waves reflects from the surfaces of the piece and from the faults of the piece. The reflected waves can be detected and therefore used to detect the faults. The place, size and shape of the imperfection can be deduced from the reflected waves. It is also known to utilize more than one ultrasonic probe for the inspection.

The reflected waves are presented on a display of a device/system that is used for the inspection. An inspector checks the indications caused by imperfections on the display. In order to do that the inspector must have great professional skills and experience to make a proper analyse. If the indications are minor, the inspector can classify the piece to be accepted. If the piece comprises unacceptable imperfections or too many imperfections, the inspector should classify the piece as rejected as per criteria set forth.

The ultrasonic scanning is suitable for using with many metals. However, some metallic materials may have limitations to be checked by the ultrasonic scanning, like large grain size austenitic steels.

Patent application WO 2013/152018 A1 discloses air-coupled ultrasonic inspection of rails.

Patent application WO 2010/129701 A2 discloses a non-contact acoustic signal propagation property evaluation of synthetic fiber rope.

Eventually however, skills of the inspector or operator influence how good the inspection results are going to be. This can be problematic especially in cases where an inspector/operator does not have so much experience yet.

Thus, a solution is needed to enable accurate, easy-to-use, and reliable evaluation system that is configured to monitor and continuously evaluate collected data, and to monitor the overall material quality fluctuations. Moreover, the plant needs solutions to classify if the forged component is acceptable or not. Furthermore, more accurate levels of quality are needed to grade the forged component (e.g. how much is it good or not).

SUMMARY

Various aspects of examples of the invention are set out in the claims.

According to a first example aspect of the present invention, there is provided a computer implemented method for determining material quality of a forged component, the method comprising:

  receiving ultrasonic scan data for a plurality of scanned forged components;
  maintaining the scan data within a data storage system;
  determining historical data associated with multiple parameters based on the scan data of the data storage system;
  generating a testing model using the historical data, wherein the testing model is configured to define multiple quality ranges for each parameter;
  scanning a forged component using at least one ultrasonic probe to provide component data; and
  determining quality information of the forged component using the testing model and the component data,
  wherein said multiple parameters comprise at least two of following: ultrasonic wave attenuation and transparency, material surface quality and material cleanliness.

In an embodiment, the method further comprises classifying the forged component to be accepted or rejected based on the quality information.

In an embodiment, the method further comprises combining the quality information with a selected subset of the historical data to provide anomalous data.

In an embodiment, the method further comprises determining anomaly for at least one parameter in view of the quality ranges based on the anomalous data.

In an embodiment, the method further comprises providing the historical data as input to a neural network, wherein the neural network is comprised by the testing model.

In an embodiment, the method further comprises generating predicted data for a subset of the scan data as output by the neural network.

In an embodiment, the method further comprises:

combining the predicted data with actual data for the subset of the scan data to provide error data, wherein the actual data is determined from the scan data of the data storage system based on association to the subset of the scan data; and
detecting the anomaly based on the error data.

In an embodiment, generating the predicted data comprises reconstructing data of at least one probe or sensor, by the neural network, based on the scan data.

In an embodiment, generating the predicted data comprises determining correlation, by the neural network, between the data from the plurality of sensors.

In an embodiment, the method further comprises determining correlation, by the neural network, for the subset of the scan data among the historical data.

In an embodiment, the neural network is trained by means of signals from the individual probes or sensors for determining internal neural network parameters.

In an embodiment, the neural network is used for determination of the anomaly based on the error data.

In an embodiment, the neural network is configured to simulate the predicted data correlating with the history data, and the neural network is adjusted to the scan data by means of a training function.

According to the invention, the multiple parameters comprise at least two of following: Ultrasonic wave attenuation and transparency; Material surface quality; Material Cleanliness. In addition, the following parameters could also be evaluated: Ultrasonic indications; and Plant calibration.

In an embodiment, the multiple quality ranges comprise at least following:

a first range configured to indicate standard values;
a second range configured to indicate expected deviation values; and
a third range configured to indicate anomaly deviation values.

In an embodiment, the method further comprises:

scanning a reference piece utilizing at least one ultrasonic probe; and
forming reference data from said scanning of the reference piece.

In an embodiment, the method further comprises adjusting at least one of the multiple quality ranges based on the reference data.

In an embodiment, the method further comprises calibrating sensitivity of the at least one ultrasonic probe based on the reference data.

In an embodiment, the testing model is arranged at a remote server apparatus.

In an embodiment, a plurality of ultrasonic probes or sensors to provide the scan data are operationally arranged to a manufacturing plant of an engine system.

In an embodiment, a subset of the plurality of probes or sensors comprises at least one probe or sensor and the historical data comprises data from the plurality of probes or sensors.

In an embodiment, the method further comprises:

receiving reference data from a remote apparatus comprising a plurality of reference probes or sensors operationally arranged to a reference system to provide reference data;
determining reference historical data based on the reference data; and
providing the reference historical data as input to a neural network.

In an embodiment, the method further comprises receiving reference data from a plurality of remote apparatuses each comprising a plurality of reference probes or sensors to provide reference data.

In an embodiment, the reference data relate to different operational conditions of a reference engine.

In an embodiment, the reference data relate to operational and environmental measurement data of the reference engine.

In an embodiment, the method further comprises:

maintaining reference data at a server apparatus;
dynamically updating the reference historical data based on the reference sensor data; and
providing the reference historical data as input to the neural network.

In an embodiment, the method further comprises:

receiving environment data relating to a marine vessel;
maintaining the environment data within the data storage system;
determining historical environment data based on the environment data of the data storage system; and
providing the historical environment data as input to the neural network.

In an embodiment, the method steps are arranged to be performed at a remote server apparatus.

According to a second example aspect of the present invention, there is provided a server apparatus for determining material quality of a forged component, comprising:

a communication interface;
at least one processor; and
at least one memory including computer program code;
the at least one memory and the computer program code configured to, with the at least one processor, cause the apparatus to:

receive ultrasonic scan data for a plurality of scanned forged components;
maintain the scan data within a data storage system;
determine historical data associated with multiple parameters based on the scan data of the data storage system;
generate a testing model using the historical data, wherein the testing model is configured to define multiple quality ranges for each parameter;
receive scan data for a forged component from at least one ultrasonic probe to provide component data; and
determine quality information of the forged component using the testing model and the component data, wherein said multiple parameters comprise at least two of following: ultrasonic wave attenuation and transparency, material surface quality and material cleanliness.

According to a third example aspect of the present invention, there is provided a computer program embodied on a computer readable medium comprising computer executable program code, which code, when executed by at least one processor of an apparatus, causes the apparatus to:

receive ultrasonic scan data for a plurality of scanned forged components;
maintain the scan data within a data storage system;
determine historical data associated with multiple parameters based on the scan data of the data storage system;
generate a testing model using the historical data, wherein the testing model is configured to define multiple quality ranges for each parameter;
scan a component using at least one ultrasonic probe to provide component data; and
determine quality information of the forged component using the testing model and the component data, wherein said multiple parameters comprise at least two of following: ultrasonic wave attenuation and transparency, material surface quality and material cleanliness.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

## BRIEF DESCRIPTION OF THE DRAWINGS

For a more complete understanding of example embodiments of the present invention, reference is now made to the following descriptions taken in connection with the accompanying drawings in which:

Fig. 1 shows a schematic drawing of a plant system of an example embodiment;
Fig. 2a presents an example block diagram of a control apparatus in which various embodiments of the invention may be applied;
Fig. 2b shows a schematic drawing of reflected ultrasound data for a component according to an example embodiment;
Fig. 3 shows a schematic picture of an testing model (TM) and related information flows according to an example embodiment;
Fig. 4a shows a schematic picture of a computer implemented method for determining forging quality of a component and a testing model (TM) according to an example embodiment;
Fig. 4b shows another schematic picture of a computer implemented method for determining forging quality of a component and a testing model (TM) according to an example embodiment;
Fig. 5 illustrates an example view on attenuation data based on scan data, according to an example embodiment of the invention;
Fig. 6 presents an example block diagram of a server apparatus in which various embodiments of the invention may be applied;
Fig. 7 shows an example view on a system, wherein material quality of a component may be determined according to an example embodiment of the invention;
Fig. 8 shows a flow diagram showing operations in accordance with an example embodiment of the invention; and
Fig. 9 shows an example view on a component quality data item according to an example embodiment of the invention.

## DETAILED DESCRIPTION OF THE DRAWINGS

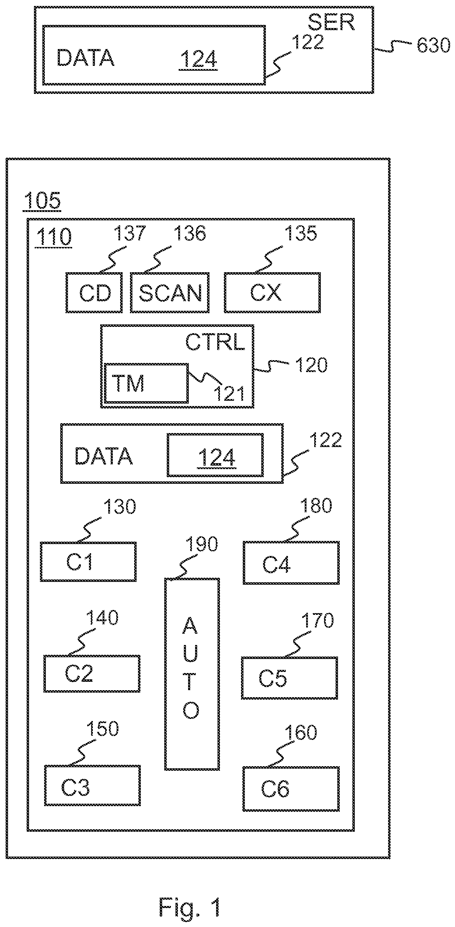

An example embodiment of the present invention and its potential advantages are understood by referring to Figs. 1 through 8 of the drawings. In this document, like reference signs denote like parts or steps.

Fig. 1 shows a schematic picture of a plant system 105 and a testing data system 110 according to an example embodiment.

The data system 110 comprises a control apparatus 120 configured to provide and operate a testing model (TM) 121 or at least part of the operations needed for the testing model (TM) 121, such as providing sensor data or probe data data system 110 to a remote server apparatus 630 where the testing model (TM) 121 is configured to be maintained and operated.

When operating a testing data system 110 with a plurality of sensors or probes operationally connected to the data system 110, data 122 is generated. Data 122 may be received from the plurality of sensors or probes operationally arranged to the plant system 105 to provide scan data 124. The scan data 124 may be maintained within a data storage system. The data 122 may also comprise data from various data sources within the data system 110, such as computer systems or communication systems, for example.

The dynamic testing model (TM) 121 may be maintained and operated by the control apparatus 120 and receive data 122 as input. Further inputs may be provided from various data sources, internal or external, as well as operational or environmental, as discussed throughout the description. Alternatively, the dynamic test model (TM) may be maintained and operated by a remote server apparatus 630 and receive input data 122 from the control apparatus 120. In such scenario the TM 121 illustrated in Fig. 1 may be the plain data collection point or collection unit to provide the data to the remote server apparatus for the actual testing model (TM).

In an embodiment, there is provided a computer implemented method for determining material quality of a component 130-180, the method comprising receiving ultrasonic scan data 124 for a plurality of scanned components 130-180, maintaining the scan data 124 within a data storage system, determining historical data associated with multiple parameters based on the scan data 124 of the data storage system, generating a testing model (TM) 121 using the historical data, wherein the testing model (TM) 121 is configured to define multiple quality ranges for each parameter, scanning a component (CX) 135 using at least one ultrasonic probe (SCAN) 136 to provide component data (CD) 137, and determining quality information of the component 135 using the testing model 121 and the component data 137. The definition and determination of the multiple quality ranges may depend on the historical data associated with multiple parameters based on the scan data of the data storage system.

In an embodiment, the multiple quality ranges comprise at least following: a first range configured to indicate standard values; a second range configured to indicate expected deviation values; and a third range configured to indicate anomality deviation values.

In an embodiment, the component 135 may be classified to be accepted or rejected based on the quality information.

In an embodiment, the testing model 121 utilizes a neural network to predict signal behavior of equipment within the plant system 105 or component 130-180 processed therein with the goal of detecting abnormal behavior within the data system 110, for example.

In an embodiment, by establishing an extended interface between the TM model 121 (or data collection unit in case the TM model is operated at remote server apparatus) and other systems like automation system 190, and different types of components 130-180 within the plant 105, for example, it is possible to gather vast amount of complex input data for TM 121 to process, learn, predict and detect anomalies.

Components 130-180 may comprise different components used at the plant 105 for assembling a system, such as an installed engine or a marine vessel, wherein the component is to be used, for example. Component (C1) 130 may comprise, for example, a Connecting Rod of an engine. By establishing the TM 121 (or data collection unit or point for the remote TM) for communicating between systems 120-190 it is possible to use artificial neural networks as computing systems. The neural network within the TM 121 itself may not be a single algorithm but a framework for many different machine learning algorithms to work together and process complex data inputs. Such systems learn to perform tasks by considering a lot of examples.

The neural network of the TM 121 may be configured to learn to reconstruct each data signal of the data 122 from an equipment of the system 110, based on all other data signals of the data 122.

Based on the difference between the reconstruction of a data signal and the actual signal, abnormal sensor behavior can be detected, as discussed in the description.

Uniqueness of the embodiments are based on the fact that, in general, the approach to anomaly detection is different. Essential feature is to use a neural network within the TM 121 to reconstruct (historical) data of the data 122 and compare it to actual data of the data 122 with the goal of detecting deviations (abnormal, anomalous behavior). This will be discussed more in relation to following figures and associated description.

In an embodiment, top priority for detection may be defined to be safety, and second and third priority can be set by the customer (surprising engine faults, wear, fuel consumption, etc.), for example. The TM 121 operates as a virtual expert for providing insight on anomalities.

The TM 121 solution will allow different levels of automation within the plant 105. In first operation mode, TM 121 may be configured to provide an anomaly detection plan, which the engineers can use for scheduling their activities. In second operation mode, TM 121 may be configured to provide an embedded solution, wherein the sub-systems can notify the operator based on the anomaly detection plan, when to perform certain tasks or be switched on or set to standby. This notification may be repeated on the plant control room or remote-control station. In third operation mode, TM 121 may be configured to provide a solution to be fully automated and automatically executing the anomaly detection plan of the TM 121 with merely notification provided to the operator or remote-control station when performing different automated tasks.

Furthermore, characteristic information representing at least one operating characteristic of an installed engine or a marine vessel, where the engine or the component is to be installed and comprising the component CX 135, may be received as data 122. The dynamic TM 121 may use any available internal or external data, and the vessel related data including the characteristic information.

In an embodiment, the plant 105 collects, analyses and stores certain amount of scan data 124 (e.g. until 1Gb) for each inspected component 130-180. That data may then be available on a dedicated server 630 and could be further processed.

In an embodiment, the TM model 121 is configured to control of connecting rods material quality. This TM model 121 is configured to classify material and gives the possibility to: define in objective and transparent way the quality of Connecting rod forgings (grade of the forging) through a newly defined innovative synthetic indicator; monitor and compare forgings quality trends within suppliers (statistical quality control); implement simple and direct visual tools to manage the inspection results; provide a powerful tool to support Supply Chain development and achieve cost optimization and scrap rates reduction for conrod forgings; and provide a tool for Risk Management and in developing new design by systematically identifying critical areas.

In an embodiment, data 122 collected over time of operation of the plant 105, or any other plant or operating environment of the final product, such as an installed engine or marine vessel where the engine or the component is installed, can be analysed with data-mining techniques to identify a new set of parameters to grade in a robust and objective way the overall quality of the material. Quality may correspond to forging quality of the material, for example.

More specifically, the following parameters may be defined and evaluated:

- Ultrasonic wave Attenuation and transparency.
- Forging surface quality.
- Material Cleanliness.

- Ultrasonic indications.
- Plant calibration.

Each of the above parameters have their significance in defining the quality of the inspected part and embodiments enable to find appropriate ranges.

In an embodiment, for each parameter, three ranges may be defined that could be identified by different colours to simplify the presentation:

- Green (range 1), corresponds to standard values; All parameters being in the Green colour range are considered as standard quality and can be installed on engine without any further action.
- Yellow (range 2), corresponds to expected deviations; One or more parameter ascribed to the yellow colour range, shall be evaluated for acceptability or further inspections.
- Red (range 3), corresponds to anomalies. One or more parameter classified in the red colour range, shall be stopped and investigated by non-destructive and destructive tests.

Hence, the testing model TM 121 may utilize the above parameters. The following sections disclose further details for each of them, how they could be defined and how they are inferred based on experimental scan data 124.

Technical effects provided by the embodiments provide a powerful tool to support supplier quality development, to reduce rate of scrap by improving the forging process quality directly at the supplier. Moreover it gives invaluable insight over the inner structure of the forgings, which can be used in the improved, more cost efficient design.

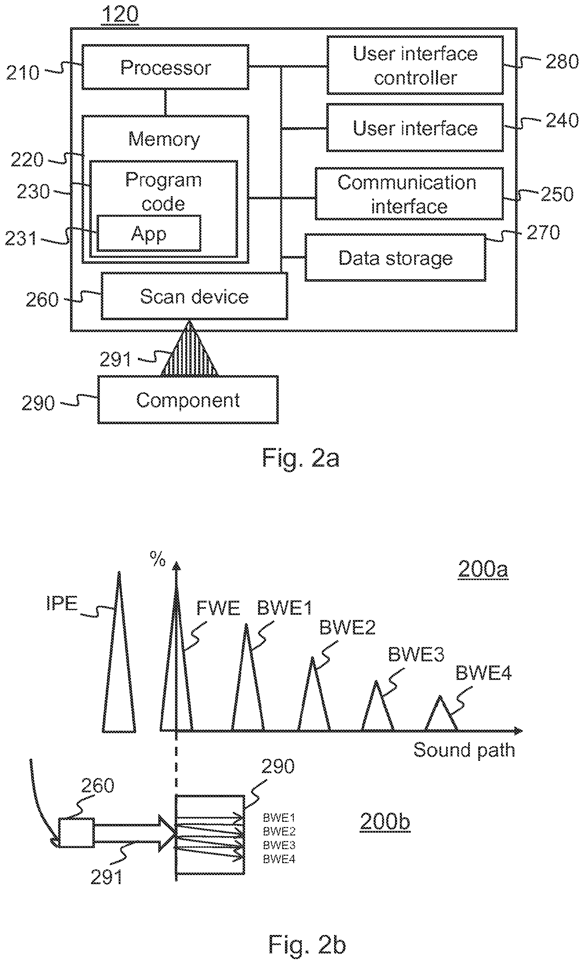

Fig. 2a presents an example block diagram of a control apparatus 120 (at a plant or at installation point such as marine vessel or a power plant, for example) in which various embodiments of the invention may be applied. The control apparatus 120 may comprise a user equipment (UE), user device or apparatus, such as a computer system,

The general structure of the control apparatus 120 may comprise a user interface 240, a communication interface 250, a data storage 270, capturing/sensor/probe device(s) 260 for scanning component or parts, a processor 210, and a memory 220 coupled to the processor 210. The apparatus 120 further comprises software 230 stored in the memory 220 and operable to be loaded into and executed in the processor 210. The software 230 may comprise one or more software modules and can be in the form of a computer program product. The apparatus 120 may further comprise a user interface controller 280.

In an embodiment, a plurality of ultrasonic probes or sensors 260 to provide the scan data may be operationally arranged to a manufacturing plant of an engine system, for example.

The processor 210 may be, e.g., a central processing unit (CPU), a microprocessor, a digital signal processor (DSP), a graphics processing unit, or the like. Fig. 2a shows one processor 210, but the apparatus 120 may comprise a plurality of processors.

The memory 220 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 120 may comprise a plurality of memories. The memory 220 may be constructed as a part of the apparatus 120 or it may be inserted into a slot, port, or the like of the apparatus 120 by a user. The memory 220 may serve the sole purpose of storing data, or it may be constructed as a part of an apparatus serving other purposes, such as processing data. A proprietary test application (client application) 231 comprising the test model TM 121 (or TM data collection point in case the TM is arranged remotely at server apparatus) is stored at the memory 220. Component data, sensor data and environmental data may also be stored to the memory 220 or to the data storage 270. The program code 230 may comprise the dynamic test model (TM) 121 and the proprietary application 231 may comprise a client application for the TM, for example.

The user interface controller 280 may comprise circuitry for receiving input from a user of the apparatus 120, e.g., via a keyboard, graphical user interface shown on the display of the user interfaces 240 of the control apparatus 120, speech recognition circuitry, or an accessory device, such as a headset, and for providing output to the user via, e.g., a graphical user interface or a loudspeaker.

The communication interface module 250 implements at least part of data transmission. The communication interface module 250 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution), or 5G radio module. The wired interface may comprise such as universal serial bus (USB) or National Marine Electronics Association (NMEA) 0183/2000 standard for example. The communication interface module 250 may be integrated into the apparatus 120, or into an adapter, card or the like that may be inserted into a suitable slot or port of the apparatus 120. The communication interface module 250 may support one radio interface technology or a plurality of technologies. The apparatus 120 may comprise a plurality of communication interface modules 250.

A skilled person appreciates that in addition to the elements shown in Fig. 2a, the apparatus 120 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 120 may comprise a disposable or rechargeable battery (not shown) for powering when external power if external power supply is not available.

In an embodiment, the apparatus 120 comprises speech recognition means. Using these means, a pre-defined phrase may be recognized from the speech and translated into control information for the apparatus 120, for example.

The data storage 270 and the scan probes or sensor device(s) 260 may be configured to be comprised by the apparatus 120 or connected as separate devices to the apparatus 120. In case they are comprised in the apparatus 120 they may be connected to the apparatus 120 using an internal bus of the apparatus 120. In case they are external devices connected to the apparatus 120 they may be connected to the apparatus 120 using communication interface 250 of the apparatus 120 or using the internal bus.

In an embodiment, an ultrasonic test system is composed of an ultrasonic scan device 260 and a control apparatus 120. The scan device 260 may be part of the apparatus 120 or separately connected to the apparatus 120. The ultrasonic scan device 260 may be a transceiver configured for receiving reflected ultrasound acoustic pressure which emanate from a scanned component 290 as a result of an interaction between the component 290 and emitted ultrasound energy 291. When the emitted ultrasound acoustic pressure 291 collides with or otherwise interacts with the component 290, some of the emitted ultrasound acoustic pressure 291 is reflected from the component 290. In some embodiments, the ultrasonic transceiver 260 is also configured for emitting the emitted ultrasound acoustic pressure 291 into the component 290. For example, the ultrasonic transceiver 260 includes both an ultrasonic transmitter and an ultrasonic receiver.

In some embodiments, a liquid interface, sometimes called a "couplant", is used to improve ultrasonic transmission between the ultrasonic transceiver 260 and the component 290. The liquid interface can be any suitable substance. In other embodiments, the ultrasonic test system is implemented as an immersion system, wherein the component 290 and part or all of the ultrasonic transceiver 260 are submerged in a basin of water or another ultrasound-conductive medium. Still other ultrasound techniques are considered, including phased-array probes, and the like.

In some embodiments, the ultrasonic transceiver 260 has one or more variable settings. Depending on one or more parameters of the component 290, the variable settings of the ultrasonic transceiver 260 are adjusted. For example, a frequency of the emitted ultrasound energy is adjusted based on the materials which make up the component 290. The frequency of the emitted ultrasound energy can be any suitable frequency, for example a normalized frequency between 5 MHz and 10 MHz, as appropriate. In another example, the strength of the emitted ultrasound energy is adjusted based on the thickness of the component 290. Still other aspects of the emitted ultrasound energy, including amplitude, phase, and the like, are adjustable as appropriate.

The control apparatus 120 is communicatively coupled to the ultrasonic transceiver 260 for obtaining therefrom ultrasound data representative of the emitted and/or reflected ultrasound energy and optionally various information pertaining to the emitted ultrasound energy. For example, the control apparatus 120 receives reflected ultrasound data (e.g scan data) which is representative of the reflected ultrasound energy. In some embodiments, the control apparatus 120 receives one or more digital representations of the reflected ultrasound energy and optionally of the emitted ultrasound energy. In other embodiments, the control apparatus 120 receives information which characterizes the reflected ultrasound acoustic pressure and optionally the emitted ultrasound energy. The control apparatus 120 is also configured for determining material quality of the component. Alternatively, mould or cast quality may be determined, as well as determining material quality or whether kiss bonds are present in the component 260 based on the reflected ultrasound energy, and optionally the emitted ultrasound energy.

In an embodiment, a proprietary test application (client application) 231 is maintained at the apparatus 120. The application 231 may comprise the TM model 231 or the TM model related data, such as component detection data that is received from the server apparatus where the TM model is run, for example.

In an embodiment, a reference piece 290 may be scanned utilizing at least one ultrasonic probe 260 to collect at least one reference data set from said scanning of the reference piece. Based on the reference data set the system sensitivity may be calibrated with the reference piece data. Furthermore it is possible to analyse the collected data of the scanned reference piece, exporting the A-scan core data of interest (minimum, maximum, average signal amplitude, size and number of areas with relevant signal amplitudes) and classifying the component to be accepted or rejected utilizing said indication data when comparing it to set acceptability level.

In an embodiment, at least one of the multiple quality ranges may be automatically adjusted based on the reference data. It is also possible to calibrate sensitivity of the at least one ultrasonic probe based on the reference data.

Fig. 2b shows a schematic drawing of reflected ultrasound data 200a for a component 290 and illustration 200b of the scan device 260, the component 290 and ultrasound acoustic pressure 291 according to an example embodiment.

A probe (such as scan device 260 in Fig. 2a) sends a ultrasonic sound wave, an initial pulse (IPE), into a tested component 290. A front wall echo (FWE) is due to reflection from the front surface of the component 290. There are multiple indications from back wall echoes BWE1-BWE4 of the component 290 as shown. BWE1 may be first reflection from the first back wall surface, parallel to the front surface of the component 290, and BWE2 may be due to the second order rear surface reflection of the component. BWE3-4 may be due to third and fourth order rear surface reflections from the back wall surface. A defect within the component material and/or an anomalous material structure may influence or adjust the ultrasound beam attenuation. That may be illustrated, for example, by damping level with a consequential increase in the reduction rate of consecutive BEW's. The sound path corresponds to the signal path of the ultrasonic sound within the component material.

In an embodiment, reflected ultrasound data 200a may illustrate an initial probe pulse IPE, a front wall echo FWE and back wall echoes BWE1-4. The front wall echo FWE and back wall echoes BWE1-BWE4 are produced when the emitted ultrasound acoustic pressure reflects off of the front surface (FWE) and rear surface (BWE1-4), respectively, of the component 290.

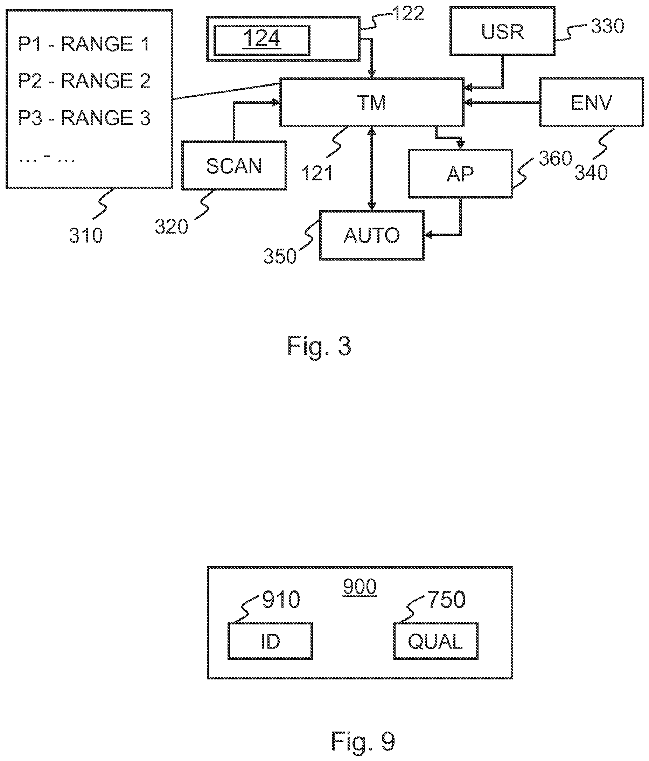

Formulas for calculation of the attenuation data are based on the scan data 124 (see Fig. 1 or 3, for example). When the component geometry of the scanned component changes, then also the formulas change. In general the formula may be expressed as:

$$\text{Attenuation} = (20 * \log((BWE\ 4)/(BWE\ 2)))/\text{sound path}$$

Where BWE may be disclosed as back wall echo % in view of the amplitude.

NOTE: BWE4 and BWE2 shall be located in the far field of the used probe beam.

Fig. 3 shows a schematic picture of an testing model (TM) 121 and related information flows according to an example embodiment.

Elements 121-360 may have alternative ways to connect with each other and Fig. 3 only shows one example embodiment. Furthermore, only connections that may relate somehow to testing (TM) 121 are illustrated.

The testing model (TM) 121 can be configured to operate as a stand-alone solution or as an integrated part of the data management system of the plant. The testing model (TM) 121 enables automation and further enables a higher degree of autonomous operation on plant and paves the way for data management for autonomous plant data system.

In an embodiment, the testing model (TM) 121 is interfaced with systems like automation system, scanner/probe/sensor device, user interface, scan data of data storage, as shown in Fig. 1, for example. The testing model (TM) 121 may further be configured to receive and manage information about the health status of sub-systems directly or through automation systems. The testing model (TM) 121 can generate tasks and/or instructions for the automation based on input data, such as scan data.

The testing model (TM) 121 may further be arranged to receive environmental information 340. The environmental information 340 may represent at least one environmental characteristic of the installation where the part or component is about to be used eventually.

In an embodiment, the testing model (TM) 121 may generate at least one task for controlling an automation element of the automation system 350 of the plant automatically based on the testing model (TM) 121 and control the associated automation element of the plant automation system 350 based on the determined task.

In an embodiment, the automation element 350 of the plant system is configured to control at least one of the following: scanner/probe device 320, component movement tool that selects and transferred the scanned component to scanning position, or component robot that moves the component to be scanned in scan position, for example.

In an embodiment, a control apparatus 120, (see e.g. Fig. 1) processing the testing model (TM) 121 is configured to receive confirmation of the task being performed from an automation element 350 being controlled by the task, and to update the testing model (TM) 121 in response to the received confirmation.

In an embodiment, the testing model (TM) 121 may generate automation plan (AP) 360 and utilize the automation plan (AP) 360 for determining control tasks within the plant system automatically based on the testing model (TM) 121.

Because the testing model (TM) 121 has access to information about optimal operation conditions of the sub-systems, the model can help to avoid stressing engines, generators and other subsystems, as the safety limit parameters are known to the testing model (TM) 121. An operating mode may be used wherein only confirmed request from the operator is needed, and the testing model (TM) 121 may allow running sub-systems outside the optimal operation conditions.

The automation plan 360 information can be provided in a first mode as a schedule made available to the engineers to follow. The engineers may perform the scheduled tasks for the automation system 350 based on the plan 360. In a second mode, the automation plan 360 may be embedded in the main display of the plant control room, for example. The automation system may be further configured to provide an integrated guidance tool to prompt the operator when a task should take place and by acknowledgement from the operator enable and perform the task and end the task when performed. A third mode allows a fully automated solution, where the operator may only be informed about the automation plan 360 or the tasks determined by the testing model (TM) 121. Optionally, current status of the model and next steps may be informed to the operator but the testing model (TM) 121 is configured to control automation elements automatically. In such embodiment the automation plan 360 may be optional.

It is possible to override the testing model (TM) 121 by changing it to standby mode and allowing a manual operation of the automation systems and the sub-systems. At the third mode, the testing model (TM) 121 can operate autonomously together with all the sub-systems. Instead of notifying the operator, the testing model (TM) 121 may log (e.g. using the automation plan 360) the activities and events and will only request assistance from the mission controller or a human operator in case the testing model (TM) 121 is facing a situation it cannot handle or it is not available for operation.

In an embodiment, the automation plan 360 may also comprise automatic information being sent to supplier data system, to next port where vessel is about to visit, or to operator of the installed engine or the marine vessel comprising corresponding component(s), for example. The information being sent may relate to, for example, estimate of services needed. By doing that the harbor authorities can make a better estimate the spare parts and labor for the vessel about to be docked.

In an embodiment, the testing model (TM) 121 is configured to receive input from an operator (USR) 330 either at plant or remote at a vessel or a ground station, for example. In certain pre-defined operating modes or tasks, it may be required that operator acknowledgement is received from the operator (USR) 330 for the detected anomaly, for adjusting other inputs for the model, for determined task the testing model (TM) 121 before controlling an automation element of the plant based on the determined task in response to the received operator acknowledgement. The user input 330 may be provided by an insight application

In an embodiment, the testing model (TM) 121 may be updated in real-time based on the scan data 124, other characteristic information 340 and user input 330, for example.

In an embodiment, the testing model (TM) 121 is configured to be generated using the historical data 122-124, wherein the testing model 121 is configured to define multiple quality ranges 310 for each parameter. The historical data associated with multiple parameters may be determined based on the scan data 124 of the data storage system.

According to the invention, the multiple parameters comprise at least two of following: Ultrasonic wave attenuation and transparency; Forging surface quality; Material Cleanliness. In addition, the following parameters could also be evaluated: Ultrasonic indications; and Plant calibration.

Parameter 1: ATTENUATION & TRANSPARENCY

Ultrasonic testing (UT) material transparency may be evaluated through the measurement of the material ultrasonic (US) attenuation coefficient. This value is obtained by three ultrasonic US frequency probes or eventual signal filter ranges applied to a signal of frequency X MHz (e.g. 5 MHz probe) setup (scanning device 136), for example:

Mean attenuation at X MHz (e.g. 5 MHz): X MHz (5 MHz) probe or band pass filter
Attenuation at X/2 MHz (e.g. 2 or 2.5 MHz): X/2 MHz (e.g. 2 or 2.5 MHz) probe or low pass filter
Attenuation at 2X MHz (e.g. 10 MHz): 2X MHz (e.g. 10 MHz) probe or high pass filter

The lower is the attenuation(s), the higher is the material transparency at the considered US frequency. Higher attenuation values to statistical mean values is related to coarser grain structures and/or presence of discontinuities. Low attenuation values are ascribed to fine structure materials with improved mechanical properties.

Formulas for calculation of the attenuation data are based on the scan data 124. When the component geometry of the scanned component changes, then also the formulas change. In general the formula may be expressed as:

Attenuation= (20*log((back wall echo)/(front wall echo)))/sound path

Back wall echo may correspond to BWE in Fig. 2b and front wall echo may correspond to FWE in Fig. 2b.
Where BWE may be disclosed as back wall echo % amplitude

The following example formulas for a dedicated type of component type for the calculation of the Attenuation data are based on the scan data 124.

$$ATTENAUTION\ 5\ MHz = \frac{1000}{2*105} * 20 * \log\frac{(SetupFileName: 0313\_CRLP\_W46\_50\_TRAS\_DBAE227258; Scan\_ChannelName: 5MHz; Gate: D; (Region: 0; MaxDataValue + Region: 1; MaxDataValue)}{(SetupFileName: 0313\_CRLP\_W46\_50\_TRAS\_DBAE227258; Scan\_ChannelName: 5MHz; Gate: C; (Region: 0; MaxDataValue + Region: 1; MaxDataValue)}$$

$$ATTENAUTION\ 10\ MHz = \frac{1000}{2*105} * 20 * \log\frac{(SetupFileName:0313\_CRLP\_W46\_50\_TRAS\_DBAE227258;\ Scan\_ChannelName:10MHz;\ Gate:D;\ (Region:0;\ MaxDataValue + Region:1;\ MaxDataValue))}{(SetupFileName:0313\_CRLP\_W46\_50\_TRAS\_DBAE227258;\ Scan\_ChannelName:10MHz;\ Gate:C;\ (Region:0;\ MaxDataValue + Region:1;\ MaxDataValue))}$$

$$ATTENAUTION\ 2\ MHz = \frac{1000}{2*105} * 20 * \log\frac{(SetupFileName:0313\_CRLP\_W46\_50\_TRAS\_DBAE227258;\ Scan\_ChannelName:2MHz;\ Gate:D;\ (Region:0;\ MaxDataValue + Region:1;\ MaxDataValue))}{(SetupFileName:0313\_CRLP\_W46\_50\_TRAS\_DBAE227258;\ Scan\_ChannelName:2MHz;\ Gate:C;\ (Region:0;\ MaxDataValue + Region:1;\ MaxDataValue))}$$

The obtained attenuation data are having the unit of [dB/m] and the obtained values may be evaluated with the assignment of the following standard, where:

Standard (range 1) corresponds to standard values;
Expected deviations (range 2) corresponds to expected deviations;
Anomalies (range 3) corresponds to severe anomalies.

For example, a standard for forged connecting rods is as per following table:

| Parameter: | Standard: | Deviations; | Anomalies |
|---|---|---|---|
| Attenuation 2 MHz; | $8 \leq \alpha \leq 12$; | $6 < \alpha2 < 8$ & $12 < \alpha2 \leq 14$; | $\alpha2 \leq 6$ & $\alpha2 > 14$ |
| Attenuation 5 MHz; | $8 \leq \alpha5 \leq 13$; | $7 < \alpha5 < 8$ & $13 < \alpha5 \leq 15$; | $\alpha5 \leq 7$ & $\alpha5 > 15$ |
| Attenuation 10 MHz; | $6 \leq \alpha10 \leq 12$; | $4 < \alpha10 < 6$ & $12 < \alpha10 \leq 14$; | $\alpha10 \leq 6$ & $\alpha10 > 14$ |

In particular, components or parts classified as 'Anomalies' may be further investigated, since that could be symptomatic of poor raw material quality, production process faults and potential failure risk on field.

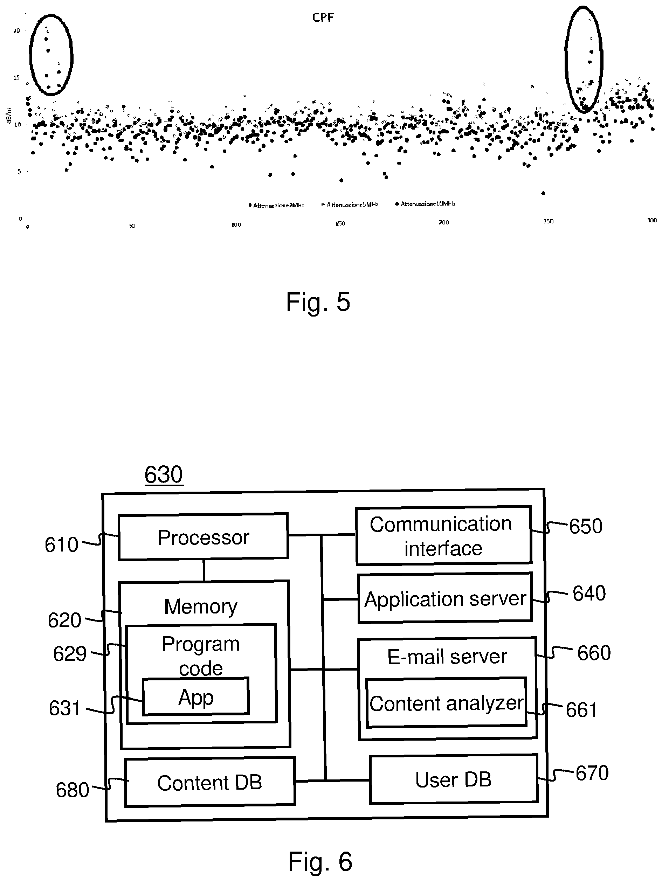

Fig. 5 illustrates an example view on attenuation data based on scan data 124, according to an example embodiment of the invention.

In an embodiment, considering the plot of attenuation data (collected from about 300 pcs) in Fig. 5, following samples have shown the highest attenuation deviations and have been classified as 'Anomalies'. It is visible that deviations (circles) occur in group of close forging number: homogeneous forging, pre- and post-forging heating as well as probably same quenching and tempering batch.

In particular the main factor considered to be influencing the material attenuation are the material micro/macro structure and material cleanliness (presence of inhomogeneity in the material). Both above material characteristics can affect the component fatigue resistance and lifetime.

In order to further validate the attenuation 'Anomalies model' it is possible to further process the properties of samples having anomalies in the attenuation data. Furthermore, it is possible to collect parts failed on field attenuation data in order to understand if this parameter was having any role in such failures.

Parameter 2 : SURFACE QUALITY (e.g. forging surface quality)

Ultrasonic testing (UT) of surface quality is evaluated considering the data corresponding to a component, such as a Connecting rod lower part (CRLP) as forged (arch) external surface reflection (from the component rear side). In particular the considered signal reflection is based on the two shear waves scan performed from CRLP internal diameter with an incident angle within the range of 35°-70°, for example of 45°, to the radial plane.

In an embodiment, main data of interest, for example for forged components, are:

a) Average signal amplitude, which is related to the mean surface conditions of the forged surfaces part. This data are influenced by production (e.g. forging conditions), forging die wear and superficial grinding. It is visible that the value has a periodicity ranging between 50 and 100 forged pieces and might be influenced by the renewal of the forging dye or its lubrication, descaling and grinding operations (shift periodicity).

b) Max signal amplitude is influenced by local deviations typically caused by localised macro superficial discontinuities (as irregular grooves or steps) and in worst cases are caused by the presence of forging laps. It is recognised that higher is the maximum signal amplitude then higher is the number of unit areas exceeding the acceptability threshold. Typically when the maximum signal amplitude exceeds the value of 40% FSH with reference gain applied, then non-acceptable indications are recognised, and defined as 'Over reference indications'.

When a sample is classified as deviation, then a visual inspection and other non-destructive testing (NDT) may be performed. When 'Anomalies' are observed then the part may be tested with visual and magnetic particles inspection; as well as grinding for discontinuity removal could be necessary.

Considering the forging surface the range standard is defined as per following, where:
Standard (range 1) corresponds to standard values;
Expected deviations (range 2) corresponds to expected deviations;
Anomalies (range 3) corresponds to severe anomalies.

| Parameter: | Standard: | Deviations: | Anomalies |
|---|---|---|---|
| Mean amplitude; | $10 \leq$ Amplitude; | $10 <$ Amplitude $< 12$; | Amplitude $\geq 12$ |
| Max amplitude; | $40 \leq$ Amplitude; | $40 <$ Amplitude $< 50$; | Amplitude $\geq 50$ |
| Over reference; | $1 \leq$ Area; | $1 <$ Area; | Area $\geq 3$ |

With this surface quality parameter it is possible for the automated plant to evaluate also the quality of the raw, e.g. forged, non-machined surfaces. In particular, considering the mean and maximum reflection values from the forging surface, it is possible to claim and improve with suppliers the presence of: Superficial forging laps; excessively deep grinding marks; and highly rough as forged surfaces, for example.

Parameter 3: CLEANLINESS

Target is to create a statistical base considering the indications observed during each scan. The obtained values are compared with the overall statistical base, comparing it within batches and suppliers. This data gives the understanding: If raw bar before forging was a good or poor quality material, and if the part could have issues with the fatigue resistance.

UT cleanliness may be evaluated considering the data corresponding to the inspection scan perpendicular to the parts forging grain flow.

In an embodiment, main data of interest are:
a) Average signal amplitude which is related to the mean cleanliness. This data are influenced by presence of discontinuities in the material, as micro-inclusions and material macrostructure.
b) Max signal amplitude is influenced by the presence of macro discontinuities as bigger inclusions could be, or planar defects (cavities or internal tears, or hydrogen flakes).
c) The parameter over reference is a count of unit data that exceeded different set of the threshold amplitude. It is a count of the size and quantity (Fault areas) of indications. Considering 50% FSH (full screen height) as the reference threshold value, indications data having amplitudes greater than ½ (25% FSH) and ¼ (12.5% FSH) of it are additionally considered and count.
d) Cleanliness K is defined as number of detected indications at reference amplitudes divided by the scanned (control) volume (in $cm^3$)

| Parameter; | Standard: | Deviations; | Anomalies |
|---|---|---|---|
| Max amplitude; | $40 \leq$ Amplitude; | $40 <$ Amplitude $< 50$; | Amplitude $\geq 50$ |
| Over reference; | $1 \leq$ Area; | $3 <$ Area; | Area $\geq 3$ |
| Cleanliness; | $K < 1$; | $1 \leq K < 2$; | $K > 2$ |

Parameter 4: US INDICATIONS

US (ultrasonic) indications is the standard evaluation parameter which is conventionally used for Ultrasonic inspection evaluation of indications. The following standard is applied in that case.

| Parameter; | Standard: | Deviations; | Anomalies |
|---|---|---|---|
| Max amplitude; | $40 \leq$ Amplitude; | $40 <$ Amplitude $< 50$; | Amplitude $\geq 50$ |
| Over reference; | $1 \leq$ Area; | $1 <$ Area; | Area $\geq 3$ |
| Fault areas; | 0; | 0; | $> 0$ |

Parameter 5: CALIBRATION

In an embodiment, monitoring of the automated plant calibration is performed by the scan at each US setup loading of the 'Check block' which has known reflectors. Collected reflector data are compared to standard reflector amplitudes and evaluated if any calibration of the plant is needed. Typically deviations in calibration data might occur due to seasonal oscillations of day mean temperature.

The following standard is applied in such case.

| Parameter; | Standard: | Deviations: | Anomalies |
|---|---|---|---|
| Max amplitude; | $\triangle$Amplitude$\pm$5%; | $\triangle$Amplitude$\leq\pm$10%; | $\triangle$Amplitude$\geq$10 |

In an embodiment, the plant 105 may be equipped with reference reflectors that are scanned for each applied scan plan. Such data are collected and monitored in order to assure proper plant and setups calibration conditions. The check block reflectors of each scan are compared with the standard calibration data. Such check evidences the variation of the setups calibration due to temperature continuous variations, especially in summer time. Such deviations can be improved as consequence of the implemented temperature conditioning system of the inspection cell. The check also provides evidence of any US probe performance deterioration or system geometry offsetting.

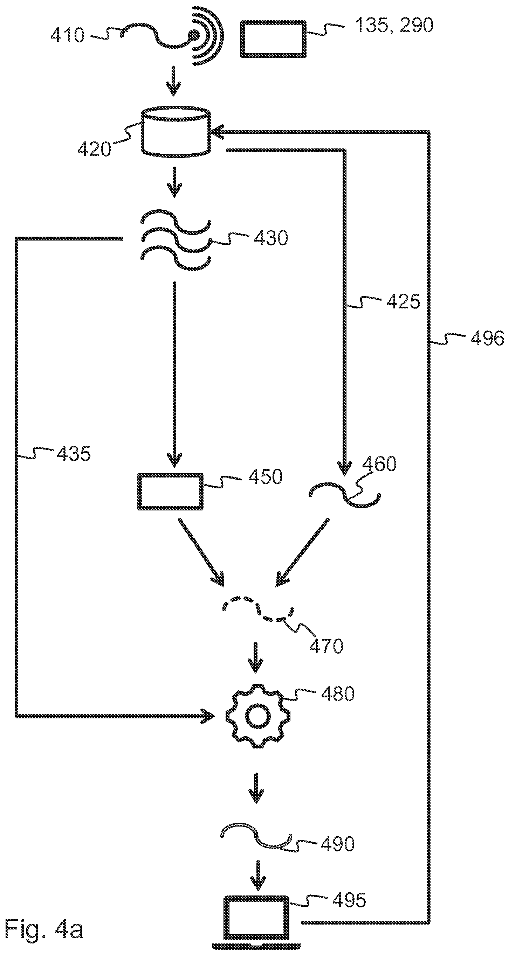

Fig. 4a shows a schematic picture of a computer implemented method for determining material quality of a component 135, 290 and a testing model (TM) 450 according to an example embodiment. The testing model (TM) 450 may be configured to be maintained at a remote server apparatus, at a remote control apparatus, at a plant testing apparatus, at an installed engine apparatus, a marine vessel control apparatus or any combination of those. For example, data collection 410 may be arranged from one apparatus (e.g. ultrasonic testing probe, scanning device), an insight input 495 from a second apparatus (e.g. remote control apparatus) and the actual data processing and neural network involvement at a third apparatus (e.g. remote server apparatus), for example.

First, ultrasonic scan data is provided for a plurality of scanned components 135, 290 using at least one ultrasonic probe or scan device 410 operationally arranged at a plant or other remote installation place like a marine vessel (or power plant), or from other data sources within the data system, for example. For example, a plurality of sensors may be operationally arranged to an engine system of the marine vessel or a power plant.

Received scan data is maintained within a data storage system 420. The data storage system 420 may be arranged to a remote server apparatus, such as cloud server, but may also be at least temporarily stored at plant data storage. The maintained scan data of the data storage system 420 is provided as source data for further processing.

Second, historical data 430 is determined based on the scan data of the data storage system 420. The historical data 430 is associated with multiple parameters based on the scan data of the data storage system. The historical data 430 may comprise data from a plurality of probes 410 and relating to a plurality of different components.

Third, a testing model (TM) 450 is generated using the historical data 430, wherein the testing model 450 is configured to define multiple quality ranges for each parameter.

Historical data 430 may comprise data from a plurality of scans and components.

Parallel to the dynamic update of the testing model 450, component data 460 may be provided by scanning a component 290 using at least one ultrasonic probe 410. The component data 460 may also be first maintained in the data storage system 420 and forwarded over connection 425. For sake of simplicity for Fig. 4a, only the connection 425 is shown, no matter the component data may also originate directly from the scanning device or probe 410.

Fourth, quality information 470 of the component is determined using the testing model 450 and the component data 460.

In an embodiment, further steps may be provided.

For example, fifth, the quality information 470 may be further processed by data processing 480 by combining the quality information 470 with a selected subset 435 of the historical data 430.

Sixth, anomalous data 490 is detected based on the data processing 480. The testing model 450 and related processing 430, 450, 480, and combining with the history data 430, may for example result to a peak (see e.g. Fig. 5) in certain actual scan data that is not as predicted by the model 450. Such deviation may indicate an anomaly even though the peak may be not high compared to the expected scan probe behavior. Alternatively, values in certain scan data may be much higher than usual, but the model 450 has predicted such behavior based on the other probe/sensor signals. Therefore, such data may not be anomalous.

In an embodiment, anomaly may be detected for at least one parameter in view of the quality ranges based on the anomalous data 490. Depending on the component 290 and its installation related requirements certain parameters and quality ranges may be emphasized when determining anomaly.

Detected anomaly may trigger certain tasks within the plant data system, either automatically, or in response to some confirmation by operating user, for example.

In an embodiment, a continuous evaluation application 495 for evaluating anomaly results may be provided. The evaluation application 495 may receive user input by experts via online application, for example. The results 490 may be labeled in the form of an 'indication of unusual data'. A tool of the application 495 used may be called an Anomaly Timeline, and it may show heat bars per probe, per component, and/or per installation. The redder a heat bar is, the more unusual the data behavior is at that point in time.

The experts may use the Anomaly Timeline tool to find the 'needles in the haystack'. The experts may review all the periods of data indicated by the model 450 as unusual in step 490 and verify these. The expert users may confirm if it is really something that should be reported to the customer, for example. Similarly, they decide if the anomaly 490 is a 'false positive' no matter the model 450 marked some period as unusual while the expert thinks it is as expected.

Once the engine expert is convinced that data is unexpected, he/she may create a case about it in communication channel, such as Case Collaboration Chat. Here the data can be discussed with all stakeholders; experts, installation crew, etc. Together the data can be studied, and a solution can be found to tackle the problem and make the data return to expected behavior.

Once the problem is solved, the case can be closed. While doing this, the stakeholders can indicate what the end solution was that solved the problem, what the severity of the case was, and more case related information.

Both the first validation round (the Anomaly Timeline) as the second (the Case Collaboration Chat) provide valuable feedback on the output 490 of the model 450. The model itself can be trained better if it knows what anomalies are considered relevant (with a high severity), and what output of the model is falsely positive. The output of the model can be processed more automatically if it can be taught to know what approach often solves unexpected data behavior.

The feedback information 496 may be gathered by the evaluation application 495 continuously. If the expert marks a period of data as irrelevant in the Anomaly Timeline, it may be configured to disappear at the view of all other experts, so nobody must check that period of data anymore. Then again, if a stakeholder of a case closes the cases and marks the case as highly severe, a separate model may learn this so that future similar anomalies will be more prominently indicated in the Anomaly Timeline. This will lead to the engine expert validating the data earlier, thereby shortening the time between model output and case creation. This would benefit the stakeholders as this enables information to be available faster to them.

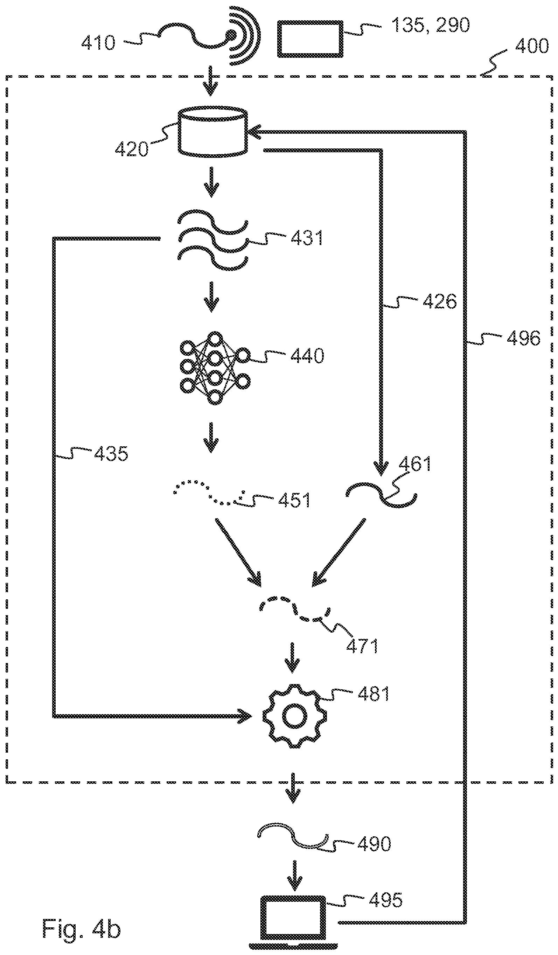

Fig. 4b shows another schematic picture of a computer implemented method for determining forging quality of a component, and system of a testing model (TM) 400 for according to an example embodiment. The testing model (TM) 400 may be configured to be maintained at a remote server apparatus, at a remote control apparatus, at a plant control apparatus, at an installed engine apparatus, at a marine vessel control apparatus or any combination of those. For example, data collection 410 may be arranged from one apparatus (e.g. plant testing apparatus with scanning probes), an insight input 496 from a second apparatus (e.g. remote control apparatus) and the actual data processing and neural network involvement at a third apparatus (e.g. remote server apparatus), for example.

First, ultrasonic scan data is received for a plurality of scanned components 135, 290, from various US scanning probes or sensors 410, for example.

The scanning probes or sensors 410 may be operationally arranged to the plant, or to marine vessel (or power plant), or scan data may be received from other data sources within the data system, for example. For example, a plurality of probes or sensors may be operationally arranged to an engine system of the marine vessel or a power plant.

Received data is maintained as scan data within a data storage system 420. The data storage system 420 may be arranged to a remote server apparatus, such as cloud server, but may also be at least temporarily stored at plant data storage. The maintained scan data of the data storage system 420 is provided as source data for further processing.

Second, historical data 431 is determined based on the scan data of the data storage system 420. The historical data 431 is associated with multiple parameters based on the scan data of the data storage system 420.

The historical data 431 may comprise data from a plurality of probes and sensors and for a plurality of components.

A testing model 400 is generated using the historical data 431, wherein the testing model is configured to define multiple quality ranges for each parameter, and the testing model 400 comprises a neural network 440. The historical data 431 may be provided as input to the neural network 440.

Third, the neural network 440 generates predicted data 451 for a subset of the scan data as output by the neural network 440. The subset comprises at least one parameter of the plurality of parameters, and may relate to a certain type of component, for example. Historical data 431 may comprise data from a plurality of probes for a plurality of components 135, 290 in view of different parameters. Parallel to the generation of predicted data 451, actual data 461 is determined 426 from the probe data of the data storage system 420 based on association to the subset of the scan data. The actual data 461 may comprise component data scanned by the probe for the component 290.

In an embodiment, the subset of the scan data may comprise scan data from several components 290 but not necessarily the total number of components wherefrom scan data is received. For example, scan data is received from N components.

In an embodiment, the testing model (TM) 400 is configured to generate reconstruction data 451 for a period of time, for component C1, based on all other scan data 431 in that same period, C2 ... Cn using the neural network 440. This is done for each component C1 ... Cn. If reconstruction data 451 is made for component Cx, that reconstruction data 451 is compared to the actual data 461 of Cx in the same period of time. Similar comparison can then be done for each component C1 ... Cn and for each parameter.

Fourth, the predicted data 451 is combined with the actual data 461 for the subset of the plurality of sensors to provide error data 471 that may equal to the quality information. The actual data 461 is determined from the scan data of the data storage 420 system based on association to the subset of the scan data.

Fifth, the error data 471 is processed by error data processing 481 of the testing model 400 by combining the error data 471 with a selected subset 435 of the historical data 430.

In an embodiment, a subset 435 of the plurality of probes or sensors comprises at least one probe or sensor and the historical data 430 comprises data from the plurality of probes or sensors.

Sixth, anomalous data 490 is detected based on the error data processing 481. The testing model 400 and related processing 431, 440, 481, and combining with the history data 431 of scan data, may for example result to a peak in certain actual component scan data that is not as predicted by the model 400 as predicted data 451. Such deviation may indicate an anomaly even though the peak may be not high compared to the expected component behavior. Alternatively, values in certain component parameter may be much higher than usual, but the model has predicted such behavior based on the other component scan signals. Therefore, such data may not be anomalous.

In an embodiment, the neural network 440 is used for determination of an anomaly 490 based on the error data 471.

In an embodiment, the neural network 440 is configured to simulate the predicted data 451 correlating with the history data 431, and the neural network 440 is adjusted to the scan data 420 by means of a training function. The training function may comprise at least one of the following: Gradient descent function; Newton's method function; Conjugate gradient function; Quasi-Newton method function; and Levenberg-Marquardt function.

In an embodiment, generating the predicted data 451 comprises reconstructing data of at least one probe or sensor 410, by the neural network 440, based on the scan data stored as part of the history data 431. Generating the predicted data 451 comprises determining correlation, by the neural network 440, between the data from the plurality of sensors. Correlation may be determined, by the neural network, for the subset of the scan data among the historical data. The neural network may be trained by means of signals from the individual probes or sensors for determining internal neural network parameters.

In an embodiment, the neural network is used for determination of the anomaly based on the error data. The neural network 440 may also be configured to simulate the predicted data 451 correlating with the history data 431, and the neural network 440 is adjusted to the scan data by means of a training function.

Detected anomaly may trigger certain tasks within the system, either automatically, or in response to some confirmation by operating user, for example.

In an embodiment, a continuous evaluation application 495 for evaluating the neural network based anomaly results may be provided. The evaluation application 495 may receive user input by experts via online application, for example. The results 490 of the neural network process 410-481 may be labeled in the form of an 'indication of unusual data'. A tool of the application 495 used may be called an Anomaly Timeline, and it may show heat bars per sensor, per asset, and/or per installation. The redder a heat bar is, the more unusual the data behavior is at that point in time.

The experts may use the Anomaly Timeline tool to find the 'needles in the haystack'. The experts may review all the periods of data indicated by the model 400 as unusual in step 490 and verify these. The expert users may confirm if it is really something that should be reported to the customer, for example. Similarly, they decide if the anomaly 490 is a 'false positive' no matter the model 400 marked some period as unusual while the expert thinks it is as expected.

Once the engine expert is convinced that data is unexpected, he/she may create a case about it in communication channel, such as Case Collaboration Chat. Here the data can be discussed with all stakeholders; experts, installation crew, etc. Together the data can be studied, and a solution can be found to tackle the problem and make the data return to expected behavior.

Once the problem is solved, the case can be closed. While doing this, the stakeholders can indicate what the end solution was that solved the problem, what the severity of the case was, and more case related information.

Both the first validation round (the Anomaly Timeline) as the second (the Case Collaboration Chat) provide valuable feedback on the output 490 of the model (TM) 400. The model itself can be trained better if it knows what anomalies are considered relevant (with a high severity), and what output of the model is falsely positive. The output of the model can be processed more automatically if it can be taught to know what approach often solves unexpected data behavior.

In an embodiment, the neural network 440 is trained by means of signals from the individual scanned components 410 for determining internal neural network parameters.

The feedback information may be gathered by the evaluation application 495 continuously. If the expert marks a period of data as irrelevant in the Anomaly Timeline, it may be configured to disappear at the view of all other experts, so nobody must check that period of data anymore. Then again, if a stakeholder of a case closes the cases and marks the case as highly severe, a separate model may learn this so that future similar anomalies will be more prominently indicated in the Anomaly Timeline. This will lead to the expert validating the data earlier, thereby shortening the time between model output and case creation. This would benefit the stakeholders as this enables information to be available faster to them.

If a stakeholder of a case closes the case and indicates the solution that solved the unexpected behavior, the Case Collaboration Chat can, next time the behavior occurs, come up with an automatic proposed solution. This greatly improves the time to solve a case. This learning will be utilizing pattern recognition techniques on the related data of all cases created on all engines, for example. This will enable knowledge from one single expert to become available to all experts.

Fig. 6 presents an example block diagram of a server apparatus 630 in which various embodiments of the invention may be applied.

The general structure of the server apparatus 630 comprises a processor 610, and a memory 620 coupled to the processor 610. The server apparatus 630 further comprises software 629 stored in the memory 620 and operable to be loaded into and executed in the processor 610. The software 629 may comprise one or more software modules, such as service application 631 and can be in the form of a computer program product. The software 629 may comprise the testing model (TM) 121, 400, 450 and the service application 631 may be configured to communicate with the client application 231 (see Fig. 2a) arranged at control apparatus 120, for example. The client application 231 may be configured to provide the scan data to the testing model 400, 450, 830, for example.

The processor 610 may be, e.g., a central processing unit (CPU), a microprocessor, a digital signal processor (DSP), a graphics processing unit, or the like. Fig. 6 shows one processor 610, but the server apparatus 630 may comprise a plurality of processors.

The memory 620 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 630 may comprise a plurality of memories. The memory 620 may be constructed as a part of the server apparatus 630 or it may be inserted into a slot, port, or the like of the server apparatus 630 by a user. The memory 620 may serve the sole purpose of storing data, or it may be constructed as a part of an apparatus serving other purposes, such as processing data.

The communication interface module 650 implements at least part of radio transmission. The communication interface module 650 may comprise, e.g., a wireless or a wired interface module. The wireless interface may comprise such as a WLAN, Bluetooth, infrared (IR), radio frequency identification (RF ID), GSM/GPRS, CDMA, WCDMA, LTE (Long Term Evolution), or 5G radio module. The wired interface may comprise such as universal serial bus (USB) or National Marine Electronics Association (NMEA) 0183/2000 standard for example. The communication interface module 650 may be integrated into the server apparatus 630, or into an adapter, card or the like that may be inserted into a suitable slot or port of the server apparatus 630. The communication interface module 650 may support one radio interface technology or a plurality of technologies. Scan data, component data, parameter data, ranges related data, and data associated with environmental data of the end product, such as engine of a marine vessel (or power plant), as well as measured engine parameters relating to operation conditions of the engine may be received by the server apparatus 630 using the communication interface 650.

The e-mail server process 660, which receives e-mail messages sent from control apparatuses 120, and remote computer apparatuses via the network 650. The server 660 may comprise a content analyzer module 661, which checks if the content of the received message meets the criteria that are set for new activity data item of the service. The content analyzer module 661 may for example check whether the e-mail message contains a valid activity data item to be used as reference data item. The valid reference data item received by the e-mail server is then sent to an application server 640, which provides application services e.g. relating to the user accounts stored in a user database 670 and content of the content management service. Content provided by the service system is stored in a content database 680.

A skilled person appreciates that in addition to the elements shown in Fig. 6, the server apparatus 630 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Not all elements disclosed in Fig. 6 are mandatory for all embodiments.

According to an embodiment, the server apparatus 630 may be configured to receive ultrasonic scan data for a plurality of scanned components; maintain the scan data within a data storage system; determine historical data associated with multiple parameters based on the scan data of the data storage system; generate a testing model using the historical data, wherein the testing model is configured to define multiple quality ranges for each parameter scan a component using at least one ultrasonic probe to provide component data; and determine quality information of the component using the testing model and the component data.

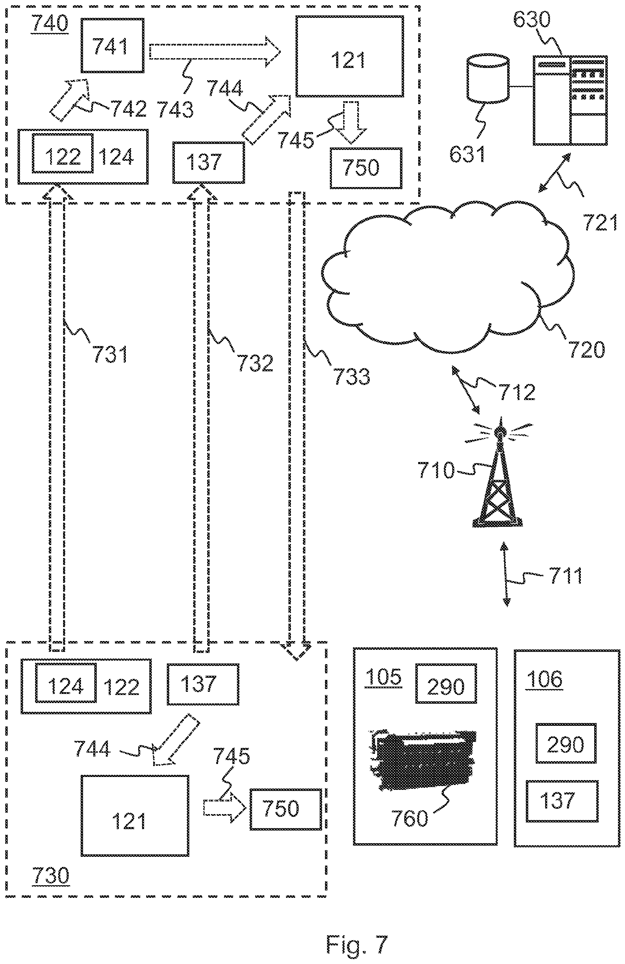

Fig. 7 shows an example view on a system, wherein material quality of a component may be determined according to an example embodiment of the invention.

In an embodiment, a plant system 105 may comprise any local site where a component 290 is manufactured, installed to some product (like an engine 760, for example) or inspected for quality in general.

In an embodiment, local data processing 730 at the plant system 105 may comprise at least following steps and items including a computer implemented method for determining material quality of a component. The method may comprise receiving plant, device or component related information, such as component or material data 122, and ultrasonic scan data 124 for a plurality of scanned components, for example. The scan data 124 may be maintained within a data storage system at the plant system 105. Data 122 may also comprise raw data.

In an embodiment, historical data associated with multiple parameters may be determined based on the scan data 124 of the data storage system at the plant site 105, and generating a testing model using the historical data, wherein the testing model is configured to define multiple quality ranges for each parameter. Furthermore, a component is scanned using at least one ultrasonic probe to provide component data, and determining quality information of the component using the testing model and the component data.

In an embodiment, component or material data 122 or scan data 124 may be transmitted 731 from the local data processing 730 of the plant system 105 to a cloud data processing 740. Furthermore, the testing model 121 may be generated and/or maintained in either or both of the processing entities 730, 740, as shown in Fig. 7.

In an embodiment, at the cloud processing 740 of the server 630, historical data 741 may be determined 742 to associate with multiple parameters based on the scan data 124 for a plurality of scanned components over time. Even before that, scan data 124 may be determined from raw data 122. The testing model 121 may be generated 743 using the historical data 741.

When having the testing model 121 in place, component data 137 may be received 732 for a scanned component 290. The component 290 may be scanned using at least one ultrasonic probe at plant 105 to provide the component data 137. The component data 137 may be combined 744 with the model 121. Quality information 750 of the component 290 is then determined 745 using the testing model 121 and the component data 137.

In an embodiment, the quality information 750 may be determined 745 in corresponding way using the local data processing 730 if available model 121 and data are arranged there, instead of, or in addition to the cloud processing 740.

In an embodiment, the testing model 121 may be generated at the cloud server 630 using cloud processing 740 and updated 733 to local processing 730 periodically.

In an embodiment, the plant 105 collects, analyses and stores data 137 for each inspected component 290. This data is available on a dedicated server 630 and can be further processed. Generated Test Model 121 is configured to classify the material quality and gives the possibility to: 1) Define in objective and transparent way the quality of the component (e.g. forged Connecting rod) forgings (grade of the forging) through a newly defined synthetic indicator; 2) Monitor and compare forgings quality trends within suppliers (statistical quality control); 3) Implement simple and direct visual tools to manage the inspection results; 4) Provide a new powerful tool to support Supply Chain development and achieve cost optimization and scrap rates reduction for conrod forgings; and 5) Provide a new tool for Risk Management and in developing new design by systematically identifying critical areas.

In an embodiment, component suppliers 106 (a plurality of plant systems similar to 105) may provide PAUT inspection data 137 collected from manufactured component 290 and load the data 137 to customer data base 631 at server 630. Such data 137 may be immediately automatically processed, analysed and evaluated. This would mean that for each component 290 manufactured at supplier plant 106, the overall quality could be defined before accepting its delivery to the customer plant 105 for installing to the apparatus 760, such as an engine, for example. Such approach reduces internal inspection costs and time at plant 105 utilising the component 290 for the product 760 and assures that all parts 290 are in accordance with specifications before leaving supplier premises towards customer plant 105.

In an embodiment, the test model 121 at server 630 may receive reference data from a remote apparatus (similar to system 105-106, such as installed engine 760, for example) comprising a plurality of reference probes or sensors operationally arranged to a reference system to provide reference data, and furthermore determining reference historical data based on the reference data; and providing the reference historical data as input to a neural network (see e.g. Fig. 4b).

The reference data may be received from a plurality of remote apparatuses each comprising a plurality of reference probes or sensors to provide reference data.

The reference data may relate to different operational conditions of a reference engine.

The reference data may relate to operational and environmental measurement data of the reference engine.

The reference data may be maintained at the server apparatus 630, and further configured to dynamically updating the reference historical data based on the reference sensor data; and providing the reference historical data as input to the neural network (Fig. 4b).

In an embodiment, the method may comprise receiving environment data relating to a marine vessel; maintaining the environment data within the data storage system; determining historical environment data based on the environment data of the data storage system; and providing the historical environment data as input to the neural network.

In an embodiment, the reference sensor data relate to operational or environmental measurement data of a marine vessel. In case the reference sensor data comprises engine sensor data, the engine sensor data may comprise information on at least one of the following: number of engine starts; operating hours since last service; load cycles of the engine; miles travelled with the engine; amount of fuel used by the engine; and temperature data of the engine.

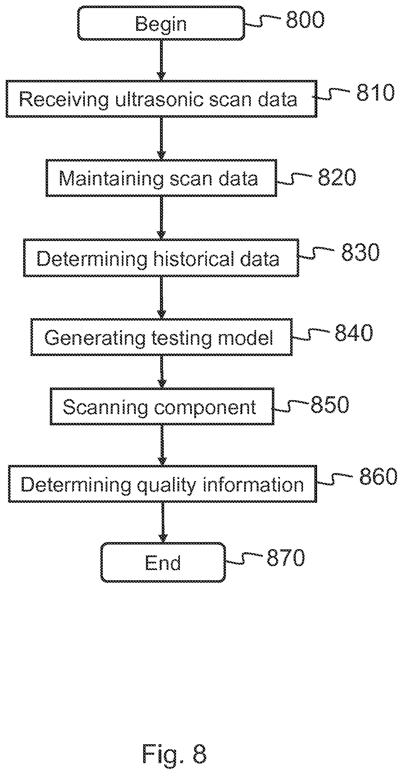

Fig. 8 shows a flow diagram showing operations in accordance with an example embodiment of the invention. In step 800, a computer implemented method for determining material quality of a component, is started. In step 810, ultrasonic scan data for a plurality of scanned components is received. In step 820, the scan data is maintained within a data storage system. In step 830, historical data associated with multiple parameters based on the scan data of the data storage system, is determined. In step 840, a testing model is generated using the historical data, wherein the testing model is configured to define multiple quality ranges for each parameter. In step 850, a component is scanned using at least one ultrasonic probe to provide component data. In step 860, quality information of the component is determined using the testing model and the component data. The method is ended instep 870.

In an embodiment, the method steps are arranged to be performed at a remote server apparatus.

Fig. 9 shows an example view on a component quality data item 900 according to an example embodiment of the invention.

In an embodiment, each scanned component 290 may be identified using unique identifier (ID) 910 and the determined quality information (QUAL) 750, as disclosed in different embodiments, for example in Fig. 7.

The quality data items 900 of all scanned components 290 may be maintained at cloud server 630, 631 (see e.g. Fig. 7) and whenever end-customer need any specific component 290, the quality data item 900 and related information may be accessed and thus an appropriate component 290 with desired quality information may be selected.

In an embodiment, a reference piece may be used for US (ultrasonic) scanning. The reference piece may have different surfaces, shapes, holes, and a projections but the reference piece has no faults or the faults of the reference piece are only minor faults, which can be accepted. In other words the reference piece is the similar piece than the component to be checked without faults or with only minor faults. The reference piece is also scanned like the piece to be checked. So the scanning device for the reference piece is the same or similar with the ultrasonic device used for the piece to be checked.

In an embodiment, the Phased Array Ultrasonic Test (PAUT) according to embodiments enables that the collected data may used for statistic process control implementation to grade each single piece for quality monitoring. This opens the possibility to take preventive actions with component suppliers instead of scrapping defective pieces. Data Mining of collected data gives information about: Effects of heat treatment, Effects of forging mould on surface quality, Insights over raw bar indications, and Effects of equipment calibration for possible automatic compensations and better inspection reliability.

In an embodiment, acceptability of a component or piece can be/is based on the amount of indications, indication dimensions (size), amount of indications as combined area size of indications, to detections of indications close to each other, to material transparency, material cleanliness or to surface quality with acceptable combination rule using the testing model 121. Indications may have passed through at least one criteria.

Without in any way limiting the scope, interpretation, or application of the claims appearing below, a technical effect of one or more of the example embodiments disclosed herein is improved method and apparatus for determining material quality of a component. Another technical effect of one or more of the example embodiments disclosed herein is that more convenient user experience from the point of operating user is enabled.

Another technical effect of one or more of the example embodiments disclosed herein is that a faster and more flexible solution is provided for performing ultrasonic scan data for a plurality of scanned components.

Another technical effect of one or more of the example embodiments disclosed herein is that system and service is cost efficient and easy-to-use.

Another technical effect of one or more of the example embodiments disclosed herein is that selection of components for different installations is optimised.

Another technical effect of one or more of the example embodiments disclosed herein is that quality inspection of forging component is improved.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

**Claims**

1. A computer implemented method for determining material quality of a forged component (135, 290), the method comprising:

receiving (810) ultrasonic scan data (124) for a plurality of scanned forged components (135, 290);
maintaining (820) the scan data (124) within a data storage system (420);
determining (830) historical data (430, 741) associated with multiple parameters based on the scan data (124) of the data storage system (420);
generating (840) a testing model (121, 450) using the historical data (741), wherein the testing model (121) is configured to define multiple quality ranges for each parameter;
scanning (850) a forged component (135, 290) using at least one ultrasonic probe (410) to provide component data (137, 460); and
determining (860) quality information (470) of the forged component (135, 290) using the testing model (121) and the component data (137, 460);
wherein said multiple parameters comprise at least two of following: ultrasonic wave attenuation and transparency, material surface quality and material cleanliness.

2. A computer implemented method of claim 1, further comprising:
classifying the forged component (135, 290) to be accepted or rejected based on the quality information (470).

3. A computer implemented method of claim 1 or 2, further comprising:
combining the quality information (470) with a selected subset (435) of the historical data (430) to provide anomalous data (490).

4. A computer implemented method of claim 3, further comprising:
determining anomality for at least one parameter in view of the quality ranges (310) based on the anomalous data (490).

5. A computer implemented method of claim 1, further comprising:
providing the historical data (741) as input to a neural network (440), wherein the neural network (440) is comprised by the testing model (121).

6. A computer implemented method of claim 5, further comprising generating predicted data (451) for a subset of the scan data (124) as output by the neural network (440).

7. A computer implemented method of any claim 1 to 6, further comprising:

scanning a reference piece utilizing at least one ultrasonic probe (410); and
forming reference data from said scanning of the reference piece.

8. A computer implemented method of any claim 1 to 7, wherein the testing model is arranged at a remote server apparatus.

9. The computer implemented method of any claim 1 to 8, wherein a plurality of ultrasonic probes (410) or sensors to provide the scan data (124) are operationally arranged to a manufacturing plant of an engine system.

10. The computer implemented method of any claim 1 to 9, further comprising:

receiving reference data from a remote apparatus comprising a plurality of reference probes or sensors operationally arranged to a reference system to provide reference data;
determining reference historical data based on the reference data; and
providing the reference historical data as input to a neural network (440).

11. The computer implemented method of claim 10, further comprising receiving reference data from a plurality of remote apparatuses each comprising a plurality of reference probes or sensors to provide reference data.

12. The computer implemented method of claim 11, wherein the reference data relate to different operational conditions of a reference engine.

13. The computer implemented method of claim 12, wherein the reference data relate to operational and environmental measurement data of the reference engine.

14. The computer implemented method of any of claims 10 to 13, further comprising:

maintaining reference data at a server apparatus;
dynamically updating the reference historical data based on the reference sensor data; and
providing the reference historical data as input to the neural network (440).

15. The computer implemented method of any claim 10 to 14, further comprising:

receiving environment data relating to a marine vessel;
maintaining the environment data within the data storage system (420);
determining historical environment data based on the environment data of the data storage system (420); and
providing the historical environment data as input to the neural network (440).

16. A server apparatus (630) for determining material quality of a forged component (135, 290), comprising:

a communication interface (650);
at least one processor (610); and
at least one memory (620) including computer program code;
the at least one memory and the computer program code (629) configured to, with the at least one processor, cause the apparatus to:

receive (810), from an ultrasonic scan device (260), ultrasonic scan data (124) for a plurality of scanned forged components (135, 290);
maintain (820) the scan data (124) within a data storage system (420);
determine (830) historical data associated with multiple parameters based on the scan data (124) of the data storage system (420);
generate (840) a testing model using the historical data, wherein the testing model is configured to define multiple quality ranges (310) for each parameter;
receive scan data for a forged component (135, 290) from at least one ultrasonic probe (410) to provide component data (137, 460); and
determine (860) quality information (470) of the forged component (135, 290) using the testing model and the component data (137, 460);
wherein said multiple parameters comprise at least two of following: ultrasonic wave attenuation and transparency, material surface quality and material cleanliness.

**Patentansprüche**

1. Computer-implementiertes Verfahren zur Bestimmung der Werkstoffqualität eines geschmiedeten Bauteils (135, 290), wobei das Verfahren umfasst:

Empfangen (810) von Ultraschallscandaten (124) für eine Mehrzahl von gescannten geschmiedeten Bauteilen (135, 290);
Führen (820) der Scandaten (124) in einem Datenspeichersystem (420);
Bestimmen (830) von mit mehreren Parametern verknüpften historischen Daten (430, 741) basierend auf den Scandaten (124) des Datenspeichersystems (420);
Erzeugen (840) eines Prüfmodells (121, 450) mit Hilfe der historischen Daten (741), wobei das Prüfmodell (121) dazu ausgelegt ist, mehrere Qualitätsbereiche für jeden Parameter zu definieren;
Scannen (850) eines geschmiedeten Bauteils (135, 290) mit Hilfe mindestens einer Ultraschallsonde (410) zur Bereitstellung von Bauteildaten (137, 460); und
Bestimmen (860) von Qualitätsinformationen (470) des geschmiedeten Bauteils (135, 290) mit Hilfe des Prüfmodells (121) und der Bauteildaten (137, 460);
wobei die mehreren Parameter mindestens zwei von Folgendem umfassen: Ultraschallwellendämpfung und Transparenz, Werkstoffoberflächenqualität und Werkstoffreinheit.

2. Computer-implementiertes Verfahren nach Anspruch 1, ferner umfassend:
Einstufen des geschmiedeten Bauteils (135, 290) als abgenommen oder zurückgewiesen basierend auf den Qualitätsinformationen (470).

3. Computer-implementiertes Verfahren nach Anspruch 1 oder 2, ferner umfassend:
Kombinieren der Qualitätsinformationen (470) mit einer ausgewählten Teilmenge (435) der historischen Daten (430) zur Bereitstellung von Anomaliedaten (490).

4. Computer-implementiertes Verfahren nach Anspruch 3, ferner umfassend:
Bestimmen einer Anomalie für mindestens einen Parameter im Hinblick auf die Qualitätsbereiche (310) basierend auf den Anomaliedaten (490).

5. Computer-implementiertes Verfahren nach Anspruch 1, ferner umfassend:
Bereitstellen der historischen Daten (741) als Eingabe in ein neuronales Netz (440), wobei das neuronale Netz (440) aus dem Prüfmodell (121) besteht.

6. Computer-implementiertes Verfahren nach Anspruch 5, ferner umfassend: Erzeugen von vorhergesagten Daten (451) für eine Teilmenge der Scandaten (124) als Ausgabe aus dem neuronalen Netz (440).

7. Computer-implementiertes Verfahren nach Anspruch 1 bis 6, ferner umfassend:

Scannen eines Referenzstücks mit Hilfe mindestens einer Ultraschallsonde (410); und
Bilden von Referenzdaten aus dem Scannen des Referenzstücks.

8. Computer-implementiertes Verfahren nach Anspruch 1 bis 7, wobei das Prüfmodell an einer fernen Server-Vorrichtung angeordnet ist.

9. Computer-implementiertes Verfahren nach Anspruch 1 bis 8, wobei mehrere Ultraschallsonden (410) oder Sensoren zur Bereitstellung der Scandaten (124) betriebswirksam an einer Fertigungsanlage eines Motorsystems angeordnet sind.

10. Computer-implementiertes Verfahren nach Anspruch 1 bis 9, ferner umfassend:

Empfangen von Referenzdaten aus einer fernen Vorrichtung, die mehrere betriebswirksam an einem Referenzsystem angeordnete Referenzsonden oder Referenzsensoren zur Bereitstellung von Referenzdaten umfasst;
Bestimmen von historischen Referenzdaten basierend auf den Referenzdaten; und
Bereitstellen der historischen Referenzdaten als Eingabe in ein neuronales Netz (440).

11. Computer-implementiertes Verfahren nach Anspruch 10, ferner umfassend: Empfangen von Referenzdaten aus mehreren fernen Vorrichtungen, die jeweils mehrere Referenzsonden oder Referenzsensoren zur Bereitstellung von Referenzdaten umfassen.

12. Computer-implementiertes Verfahren nach Anspruch 11, wobei sich die Referenzdaten auf unterschiedliche Betriebsbedingungen eines Referenzmotors beziehen.

13. Computer-implementiertes Verfahren nach Anspruch 12, wobei sich die Referenzdaten auf Betriebs- und Umweltmessdaten des Referenzmotors beziehen.

14. Computer-implementiertes Verfahren nach Anspruch 10 bis 13, ferner umfassend:

Führen von Referenzdaten an einer Server-Vorrichtung;
dynamisches Aktualisieren der historischen Referenzdaten basierend auf den Referenzsensordaten; und
Bereitstellen der historischen Referenzdaten als Eingabe in das neuronale Netz (440).

15. Computer-implementiertes Verfahren nach Anspruch 10 bis 14, ferner umfassend:

Empfangen von Umweltdaten in Bezug auf ein Wasserfahrzeug;

Führen der Umweltdaten im Datenspeichersystem (420);

Bestimmen von historischen Umweltdaten basierend auf den Umweltdaten des Datenspeichersystems (420); und

Bereitstellen der historischen Umweltdaten als Eingabe in das neuronale Netz (440).

16. Server-Vorrichtung (630) zur Bestimmung der Werkstoffqualität eines geschmiedeten Bauteils (135, 290), umfassend:

eine Kommunikationsschnittstelle (650);

mindestens einen Prozessor (610); und

mindestens einen Speicher (620), der einen Computerprogrammcode aufweist;

wobei der mindestens eine Speicher und der Computerprogrammcode (629) dazu ausgelegt sind, mit dem mindestens einen Prozessor die Vorrichtung zu veranlassen zum:

Empfangen (810) von Ultraschall-Scandaten (124) für eine Mehrzahl von gescannten geschmiedeten Bauteilen (135, 290) aus einer Ultraschall-Scanvorrichtung (260);

Führen (820) der Scandaten (124) in einem Datenspeichersystem (420);

Bestimmen (830) von mit mehreren Parametern verknüpften historischen Daten basierend auf den Scandaten (124) des Datenspeichersystems (420);

Erzeugen (840) eines Prüfmodells mit Hilfe der historischen Daten, wobei das Prüfmodell dazu ausgelegt ist, mehrere Qualitätsbereiche (310) für jeden Parameter festzulegen;

Empfangen von Scandaten für ein geschmiedetes Bauteil (135, 290) aus mindestens einer Ultraschallsonde (410) zur Bereitstellung von Bauteildaten (137, 460); und

Bestimmen (860) von Qualitätsinformationen (470) des geschmiedeten Bauteils (135, 290) mit Hilfe des Prüfmodells und der Bauteildaten (137, 460);

wobei die mehreren Parameter mindestens zwei von Folgendem umfassen: Ultraschallwellendämpfung und Transparenz, Werkstoffoberflächenqualität und Werkstoffreinheit.

## Revendications

1. Procédé mis en oeuvre par ordinateur pour déterminer la qualité du matériau d'un composant forgé (135, 290), ledit procédé comprenant les étapes consistant à :

recevoir (810) des données de balayage ultrasoniques (124) pour une pluralité de composants forgés (135, 290) balayés;

maintenir (820) les données de balayage (124) dans un système de stockage de données (420);

déterminer (830) des données historiques (430, 741) associées à plusieurs paramètres sur la base des données de balayage (124) du système de stockage de données (420);

générer (840) un modèle de contrôle (121, 450) à l'aide des données historiques (741), ledit modèle de contrôle (121) étant configuré pour définir plusieurs gammes de qualité pour chaque paramètre;

balayer (850) un composant forgé (135, 290) à l'aide d'au moins une sonde à ultrasons (410) pour fournir des données de composant (137, 460); et

déterminer (860) des informations de qualité (470) du composant forgé (135, 290) à l'aide du modèle de contrôle (121) et des données de composant (137, 460);

lesdites plusieurs paramètres comprenant au moins deux de ce qui suit : atténuation des ondes ultrasoniques et transparence, qualité de la surface du matériau et propreté du matériau.

2. Procédé mis en oeuvre par ordinateur selon la revendication 1, comprenant également l'étape consistant à : classifier le composant forgé (135, 290) comme accepté ou rejeté sur la base des informations de qualité (470).

3. Procédé mis en oeuvre par ordinateur selon la revendication 1 ou 2, comprenant également l'étape consistant à : combiner les informations de qualité (470) avec un sous-ensemble choisi (435) des données historiques (430) pour fournir des données anormales (490).

4. Procédé mis en oeuvre par ordinateur selon la revendication 3, comprenant également l'étape consistant à : déterminer une anomalie pour au moins un paramètre à l'égard des gammes de qualité (310) sur la base des données anormales (490).

5. Procédé mis en oeuvre par ordinateur selon la revendication 1, comprenant également l'étape consistant à : fournir les données historiques (741) en entrée à un réseau neuronal (440), ledit réseau neuronal (440) étant composé du modèle de contrôle (121).

6. Procédé mis en oeuvre par ordinateur selon la revendication 5, comprenant également l'étape consistant à générer des données prévisionnelles (451) pour un sous-ensemble des données de balayage (124) en sortie du réseau neuronal (440).

7. Procédé mis en oeuvre par ordinateur selon l'une des revendications 1 à 6, comprenant également les étapes consistant à :

    balayer une pièce de référence à l'aide d'au moins une sonde à ultrasons (410) et
    constituer des données de référence à partir du balayage de la pièce de référence.

8. Procédé mis en oeuvre par ordinateur selon l'une des revendications 1 à 7, dans lequel le modèle de contrôle est disposé à un dispositif de serveur distant.

9. Procédé mis en oeuvre par ordinateur selon l'une des revendications 1 à 8, dans lequel une pluralité de sondes à ultrasons (410) ou de capteurs pour fournir des données de balayage (124) sont opérationnellement disposés sur une installation de fabrication d'un système moteur.

10. Procédé mis en oeuvre par ordinateur selon l'une des revendications 1 à 9, comprenant également les étapes consistant à :

    recevoir des données de référence venant d'un dispositif distant comprenant une pluralité de sondes ou de capteurs de référence opérationnellement disposés à un système de référence pour fournir des données de référence;
    déterminer des données de référence historiques sur la base des données de référence; et
    fournir les données de référence historiques en entrée à un réseau neuronal (440).

11. Procédé mis en oeuvre par ordinateur selon la revendication 10, comprenant également l'étape consistant à recevoir des données de référence d'une pluralité de dispositifs distants comprenant chacun une pluralité de sondes ou capteurs de référence pour fournir des données de référence.

12. Procédé mis en oeuvre par ordinateur selon la revendication 11, dans lequel les données de référence se rapportent à des conditions opérationnelles différentes d'un moteur de référence.

13. Procédé mis en oeuvre par ordinateur selon la revendication 12, dans lequel les données de référence se rapportent à des données de mesure opérationnelles et environnementales du moteur de référence.

14. Procédé mis en oeuvre par ordinateur selon l'une des revendications 10 à 13, comprenant également les étapes consistant à :

    maintenir des données de référence sur un dispositif de serveur;
    actualiser de manière dynamique les données de référence historiques sur la base des données du capteur de référence; et
    fournir les données de référence historiques en entrée au réseau neuronal (440).

15. Procédé mis en oeuvre par ordinateur selon l'une des revendications 10 à 14, comprenant également les étapes consistant à :

    recevoir des données environnementales relatives à un navire marin;
    maintenir les données environnementales dans le système de stockage de données (420);
    déterminer des données environnementales historiques sur la base des données environnementales du système de stockage de données (420); et
    fournir les données environnementales historiques en entrée au réseau neuronal (440).

**16.** Dispositif de serveur (630) pour déterminer la qualité du matériau d'un composant forgé (135, 290), comprenant :

une interface de communication (650);
au moins un processeur (610); et
au moins une mémoire (620) comportant un code de programme informatique;
ladite au moins une mémoire et ledit code de programme informatique (629) étant configurés pour amener, avec ledit au moins un processeur, le dispositif à :

recevoir (810) des données de balayage ultrasoniques (124), en provenance d'un dispositif de balayage ultrasonique (260), pour une pluralité de composants forgés (135, 290) balayés;
maintenir (820) les données de balayage (124) dans un système de stockage de données (420);
déterminer (830) des données historiques associées à plusieurs paramètres sur la base des données de balayage (124) du système de stockage de données (420);
générer (840) un modèle de contrôle à l'aide des données historiques, ledit modèle de contrôle étant configuré pour définir plusieurs gammes de qualité (310) pour chaque paramètre;
recevoir des données de balayage pour un composant forgé (135, 290) en provenance d'au moins une sonde à ultrasons (410) pour fournir des données de composant (137, 460); et
déterminer (860) des informations de qualité (470) du composant forgé (135, 290) à l'aide du modèle de contrôle et des données de composant (137, 460);
lesdites plusieurs paramètres comprenant au moins deux de ce qui suit : atténuation des ondes ultrasonores et transparence, qualité de la surface du matériau et propreté du matériau.

Fig. 1

210 — Processor

120

Processor

User interface controller — 280

220 — Memory

Memory

User interface — 240

230 — Program code

Program code

Communication interface — 250

231 — App

App

Data storage — 270

260 — Scan device

Scan device

291

290 — Component

Component

Fig. 2a

% 

200a

IPE

FWE BWE1

BWE2

BWE3

BWE4

Sound path

260

291

290

200b

BWE1
BWE2
BWE3
BWE4

Fig. 2b

P1 - RANGE 1

P2 - RANGE 2

P3 - RANGE 3

... - ...

124 — 122

USR — 330

TM

121

SCAN

AP — 360    340

ENV

310

320

350    AUTO

Fig. 3

900

910

750

ID

QUAL

Fig. 9

Fig. 4a

Fig. 4b

CPF

Fig. 5

<u>630</u>

Fig. 6

Fig. 7

Begin — 800

Receiving ultrasonic scan data — 810

Maintaining scan data — 820

Determining historical data — 830

Generating testing model — 840

Scanning component — 850

Determining quality information — 860

End — 870

Fig. 8

**EP 4 085 248 B1**

**Patent documents cited in the description**

- WO 2013152018 A1

- WO 2010129701 A2